# EUROPEAN PATENT SPECIFICATION

(11) **EP 4 194 243 B1**
(45) Date of publication and mention of the grant of the patent: **11.02.2026**
(21) Application number: 21306721.8
(22) Date of filing: 07.12.2021
(51) Int. Cl.: B60K 15/04, B60L 53/16, H01R 13/506, H01R 13/508, H01R 13/74

(54) **CHARGING PORT OF A HYBRID OR ELECTRIC VEHICLE**
LADEANSCHLUSS EINES HYBRIDEN ODER ELEKTRISCHEN FAHRZEUGS
PORT DE CHARGE D'UN VÉHICULE HYBRIDE OU ÉLECTRIQUE

(43) Date of publication of application: 14.06.2023
(73) Proprietor: Nexans, 92400 Courbevoie (FR)
(72) Inventor: BANIC, Marko, 92685 Floss (DE)
(74) Representative: Ipsilon

(56) References cited:
- EP-A1- 2 955 794
- WO-A1-2019/141590
- US-A1- 2014 127 924

## Description

### Field of the invention

The present invention relates to a charging port of a hybrid or electric vehicle, more particularly to a combination of a charging socket and a corresponding holder.

### Background

Charging sockets of electric and hybrid vehicles are normally mounted to the vehicle by means of a mechanical interface that may be individual to each vehicle model. It is a requirement that the charging socket can be removed and re-mounted several times in order to allow repairing of the vehicle, in particular of body parts, without necessarily having to dismantle or replace the highvoltage electric connections. In addition, the charging socket shall withstand forces of at least 600 N in a plane perpendicular to an insertion direction of a charging cable and forces of at least 1100 N in the insertion direction of the charging cable within a temperature range of -40°C to +80°C. Nevertheless, the force required for mounting the charging socket should not exceed a significantly lower value, e.g., 85 N.

Known solutions for mounting charging sockets to vehicles include a mechanical interface, e.g., a holder or base plate, which is shaped to fit with the respective vehicle body and has a cut out opening that receives the charging socket. The charging socket may be fixed to the holder or base plate by means of a number of snap hooks that are placed along the circumference of the charging socket. The holder or base plate may remain attached to the vehicle's body when the charging socket is removed, and can be replaced when damaged, without necessarily also having to replace the charging socket, if it remains undamaged. The holder or base plate can be attached and fixed to the vehicle's body in various ways known to the skilled person.

In order to mount the charging socket to the holder or base plate while providing the required strengths in the direction perpendicular to and in the insertion direction of the charging cable, a large number of snap hooks is required, and each snap hook must be relatively rigid. This, however, makes removing the charging socket from the holder or base plate difficult and cumbersome. One solution for facilitating removing the charging socket from the holder or base plate involves a mounting tool that engages with the snap hooks, moving them into a release position when pushed in a mounting direction, and thus reduces the force required for mounting or removing the charging socket. However, it may still be cumbersome to operate the mounting tool when the charging port is mounted in a confined space or a space that is difficult to reach. Also, the known solution requires tight tolerances and is sensitive to warping and bending. WO 2019/141590 A1 discloses a charging socket according to the preamble of claim 1.

### Summary of the invention

It is, therefore, desirable to provide an alternative design of a charging port assembly of a hybrid or electric vehicle having a charging socket, a holder or base plate, and fixing means for releasably fixing the charging socket to the holder or base plate.

This object is achieved by the charging socket of claim 1.

Advantageous embodiments and developments of the holder or base plate, the charging port, the lever and the bracket, respectively, are described in the respective dependent claims.

A holder or base plate of a charging port assembly of a hybrid or electric vehicle comprises an opening adapted to receive a charging socket. Further, resilient latching means and non-resilient latching means are provided, which are both configured for removably fixing a charging socket inserted into the opening. The resilient latching means may comprise snap hooks that engage with corresponding rims, ridges or grooves of the charging socket. Preferably, the resilient latching means are arranged at opposing sides of the opening. The resilient latching means, which may be an integral part of the holder or base plate or separate parts that are mounted thereto, are configured to hold the charging socket in place, once it is inserted into the opening, to facilitate engaging locking means coupled with the charging socket with the non-resilient latching means, which non-resilient latching means securely fix the charging socket to the base plate or holder. The non-resilient latching means may comprise lugs having openings that are arranged to receive locking studs or locking pins. Pairs of lugs may be arranged at opposing sides of the opening in the holder or base plate, with the openings in the lugs being aligned along an axis or along parallel axes.

In one or more embodiments the opening in the holder or base plate has a shape that matches the outer shape of the charging socket. This may improve the resilience against forces perpendicular to an insertion direction of a charging cable into the charging socket.

While the resilient latching means may be an integral part of the base plate or holder, in one or more embodiments the non-resilient latching means are made from a different material than the holder or base plate and are partially moulded into the holder or base plate. Preferably, the material of the non-resilient latching means has a higher tensile strength than the material of the base plate or holder. Suitable materials comprise various metals, e.g., steel or aluminium. For improved stability, the non-resilient latching means may have a base section that lies in a plane essentially parallel to a plane of the holder or base plate, and that is moulded into the holder or base plate.

In one or more embodiments a seal is provided around the circumference of the opening, for providing a sealing between the base plate or holder and a charging socket inserted into the opening. The seal may comprise a flexible lip or compressible strip that is in tight contact with a surface of the charging port inserted into the opening.

According to an aspect of the invention, a charging socket of the charging port assembly of a hybrid or electric vehicle comprises a housing and one or more electrical contacts. The housing has at least one ledge, ridge, rim or groove that is positioned and configured to engage with a protruding part of a corresponding first latching means of the holder or base plate when the charging socket is inserted into the opening thereof. The housing further has at least one receiving part arranged to receive a lever and to provide a guide for a sliding movement of the lever along an axis perpendicular to an insertion direction of the charging port into the opening of the holder or base plate.

In one or more embodiments at least one receiving part of the charging socket has an upper and a lower guide, for guiding the lever along the axis perpendicular to the insertion direction of the charging port into the opening of the holder or base plate.

In one or more embodiments two pairs of receiving parts are arranged at opposing sides of the charging socket, for providing proper fixing.

In one or more embodiments the at least one receiving part is made from a different or same material than the housing and is partially moulded into the housing, glued or welded to the housing, or attached to the housing in a form-fitting manner, preventing at least a movement of the receiving part in the insertion direction of the charging port into the opening of the holder or base plate.

In one or more embodiments a seal is provided around the circumference of the housing of the charging socket, for providing a sealing between charging socket inserted into the opening of the base plate or holder. The seal may comprise a flexible lip or compressible strip that is in tight contact with a surface of the holder or base plate.

A lever of the charging port assembly of a hybrid or electric vehicle has a first and a second section, both of which extend along essentially parallel axes. The first and second sections are connected by a rod-like section that runs essentially perpendicular to the first and second section. The first section is configured to be received and guided in a bracket that connects two levers. The rod-like section is configured to be received and guided in an upper guide of a receiving part of a charging socket. The lever further comprises a locking stud and a guide fin arranged at an end of the second section. The guide fin is configured to be received and guided in a lower guide of the receiving part of the charging socket.

In one or more embodiments the first section of the lever comprises an oblique guide plane for translating a displacement of the lever relative to the bracket along the first section into a displacement of the lever perpendicular to the first section.

In one or more embodiments the lever has a locking ledge that is adapted to hook over an upper surface of a tab of the bracket, for securing the bracket against unwanted movement. This locking may preferably occur when the levers are pushed away from each other, and the locking studs are fully engaged with the non-resilient latching means.

A bracket of the charging port assembly of a hybrid or electric vehicle comprises a centre frame, at opposing ends of which tabs are connected to the centre frame through connecting sections. A force transmission block is arranged centrally on the centre frame. First and second guides for guiding a lever received in the bracket are provided on opposing sides of the force transmission block. A force acting perpendicular to a plane parallel to the centre frame may be applied to the bracket through the tabs or the centre frame, e.g., through the force transmission block.

In one or more embodiments the first guides protrude from the respective connecting section in a direction facing the respective opposite connecting section.

In one or more embodiments the second guides comprise guide grooves located at opposing sides of the force transmission block and facing towards the first guides.

A charging port assembly of a hybrid or electric vehicle, comprises a holder or base plate according to the first aspect of the invention, a charging socket according to the second aspect of the invention, one or more levers according to the third aspect of the invention, and a bracket according to the fourth aspect of the invention.

In other words, a charging port assembly of a hybrid or electric vehicle comprises a holder or base plate and a charging socket. The charging socket is adapted to receive and guide two or more levers, which are connected in pairs by a respective bracket. The brackets are adapted to cooperate with oblique guide planes of the levers, for translating a displacement of the levers relative to the bracket in a first direction along the levers into a displacement of the levers in a second direction perpendicular to the first direction, thereby moving locking studs of the levers into non-resilient latching means of the base plate, and fixing the charging socket to the holder or base plate.

The inventive charging port assembly has lower requirements as to tolerances compared to known solutions, and is easier to assemble and disassemble, requiring less force. It also is easier to manufacture at lower cost. In addition, identical charging sockets may be used with different holders or base plates that are adapted to different vehicles.

### Brief description of the drawings

In the following section the invention will be described in greater detail with reference to an exemplary embodiment shown in the attached drawing. In the drawing
- Fig. 1: shows a perspective view of a section of an exemplary base plate or holder of a charging port in accordance with the invention,
- Fig. 2: shows a see-through representation of the holder or base plate of figure 1,
- Fig. 3: shows a perspective front view of an exemplary charging socket in accordance with the invention,
- Fig. 4: shows a detail of the charging socket of figure 3,
- Fig. 5: shows a lever that is mountable in a receiving part of the charging socket and a bracket for connecting and operating two levers,
- Fig. 6: shows different steps of mounting the lever to the charging socket,
- Fig. 7: shows the restriction to a linear movement of the lever in the guides of the receiving parts of the charging sockets,
- Fig. 8: shows the assembly of brackets to respective pairs of levers that are mounted in receiving parts of the charging socket,
- Fig. 9: shows a perspective view of the charging socket with four levers and two brackets mounted thereto,
- Fig. 10: shows the assembly of figure 9 placed on a holder or base plate, forming a charging port assembly,
- Fig. 11: shows the fixing of the charging socket to the holder or base plate by means of the levers of the charging socket engaging in the lugs of the holder or base plate, and
- Fig. 12: shows the charging socket fixed to the holder or base plate.

All figures are schematic and are not to scale. In the figures, identical or similar elements may be referenced with the same reference designators.

### Description of embodiments

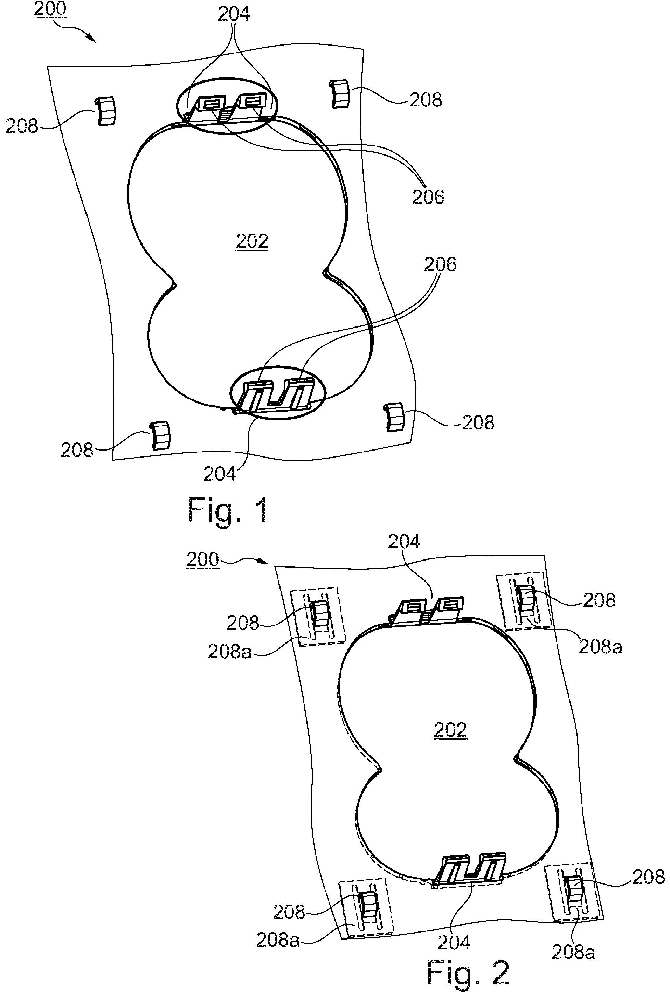

Figure 1 shows a perspective view of a section of an exemplary base plate or holder 200 of a charging port 100 of a hybrid or electric vehicle. In the figure, only the part relevant to the mounting of the charging socket 200 are shown. The part that may be adapted to the shape of a vehicle's body are not shown. The base plate or holder 200 may be a moulded plastic part. An opening 202 is provided in the base plate or holder 200, which is shaped to receive the charging socket 300 (not shown in the figure). Snap hooks 204 are provided, protruding parts 206 of which engage with respective shapes of the charging socket 300 for fixing it to the during base plate or holder 200 during mounting. The snap hooks 204 do not need to withstand the required force in the insertion direction of the charging cable. The shape of the cut out 202 corresponds with the shape of the charging socket 300 and provides the required resistance to forces perpendicular to the insertion direction of the charging cable. The snap hooks 204 may be an integral part of the holder or base plate 200 or may be separate parts. Two sets of lugs 208 are provided at opposing sides of the opening 202, each set having two lugs 208, whose openings are aligned along an axis or along parallel axes. The two lugs 208 of a set are likewise arranged at opposing sides of the opening 202.

The lugs 208 are preferably made from a material having a high tensile strength, e.g., metal, although it may also be possible to make the lugs 208 an integral part of the holder or base plate 200. As will be better understood with reference to figure 2, which shows a see-through representation of the holder or base plate of figure 1, if the lugs 208 are made from a different material than the holder or base plate 200, the lugs 208 may have a base section 208a that is moulded into the material of the base plate or holder 200.

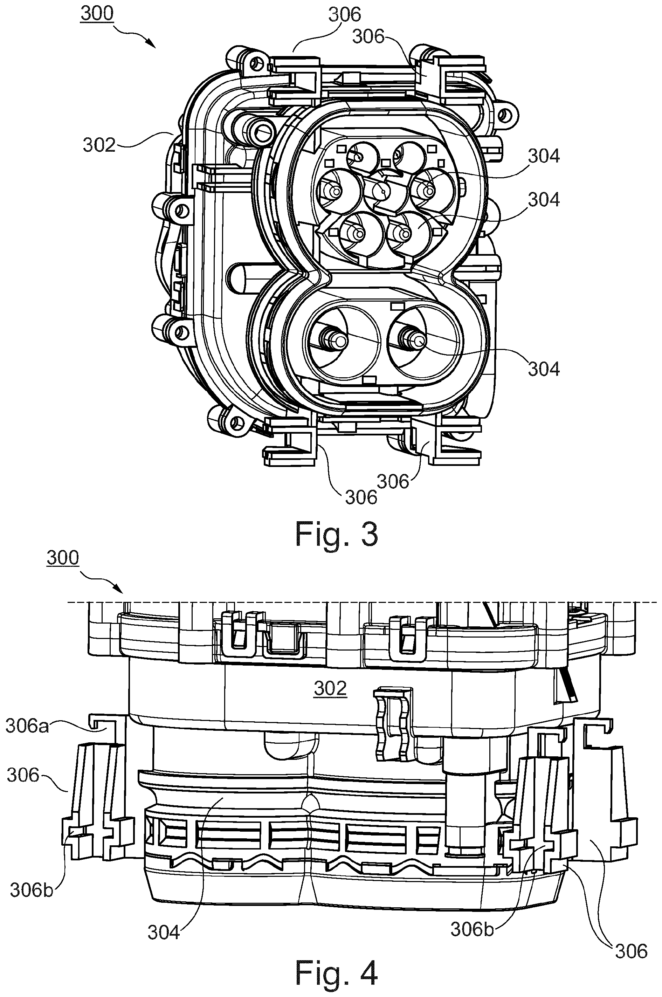

Figure 3 shows a perspective front view of an exemplary charging socket 300 in accordance with the invention. A housing 302 of the charging port 300 accommodates one or more electrical contacts 304 in a generally known and typically standardized manner. Four receiving parts 306 are arranged on the housing, each receiving part 306 being adapted to receive a lever 308 and to provide an upper guide 306a and a lower guide 306b for a sliding movement of the received lever 308 along an axis. The upper and lower guides 306a, 306b are not visible in figure 3.

Figure 4 shows a detail of the charging socket 300 of figure 3, in which the groove 304 that engages with the protruding parts 206 of the snap hooks and the upper guide 306a as well as the lower guide 306b are visible. The upper guide 306a provides a snap-in guide for a rod-like section 328 of the lever 308, and the lower guide 306b is formed to accommodate a cross-shape section of the lever 308.

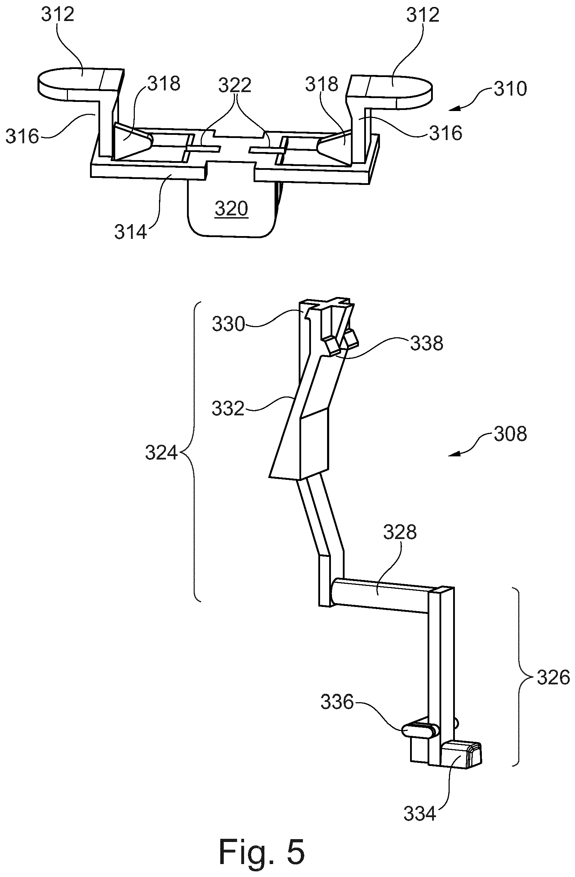

Figure 5 shows a lever 308 that is mountable in a receiving part 306 of the charging socket 300 and a bracket 310 for connecting and operating two levers 308. The bracket 310 has two flanges 312 for applying a force to the bracket 310. Each tab 312 is connected to a centre frame 314 through a connecting section 316 that runs essentially perpendicular to the centre frame 314. A blade 318 protrudes from the connecting section 316 towards the respective other connecting section 316. Centre frame 314 comprises a force transmission block 320 that is arranged between the opposing connecting sections 316. Force transmission block 320 has two opposing guide groves 322, each guide groove 322 facing towards a respective blade 318 and running perpendicular to a plane parallel to the centre frame 314. Centre frame 314 further has openings between the force transmission block 320 and each respective connecting section 316, through which a lever 308 can pass.

Lever 308 has a first and a second section 324 and 326 extending along essentially parallel axes, which are connected by the rod-like section 328 that runs essentially perpendicular to the first and second section 324 and 326. Rod-like section 328 is adapted to be received and guided in an upper guide 306a of charging socket 300. An end of the first section 324 of lever 308 has a guide blade 330 that is adapted to be received and guided in guide notch 322 of bracket 310. An oblique sliding plane 332 extends from the end of the first section 324 towards the rod-like section 328. At an end of the second section 326 a locking stud 334 extends along an axis essentially to that of the rod-like section 328. Locking stud 334 is adapted to be received in an opening of lug 208 of the holder or base plate 200. Near the end of the second section 326 guide fins 336 extend in a plane perpendicular to the axis along which the second section 326 extends. Guide fins 336 are adapted to be received and guided in lower guide 306b of charging socket 300. A locking ledge 338 is provided, for hooking over an upper surface of a tab 312 of the bracket 310, and for securing the bracket 310 against unwanted movement once engaged.

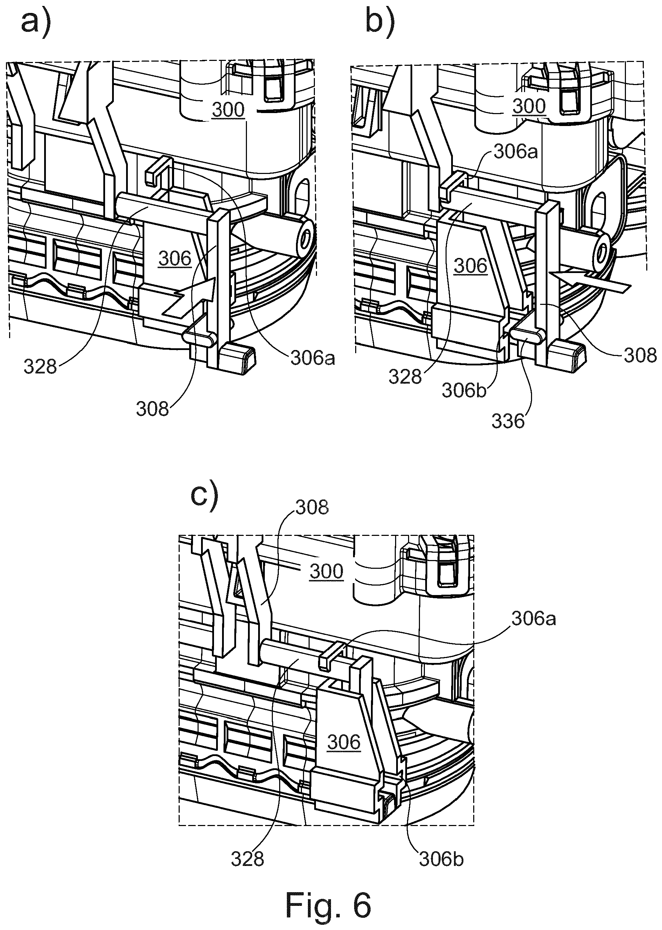

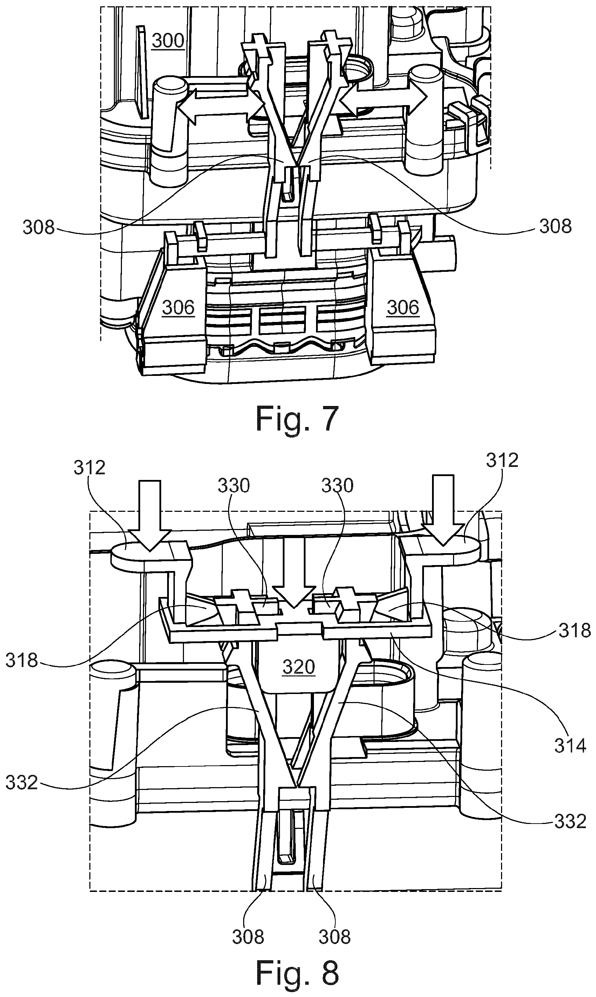

Figure 6 shows different steps of mounting the lever 308 to the charging socket 300. In figure 6 a) the lever 308 is placed next to a receiving part 306 of charging socket 300, with the rod-like section 328 next to the upper guide 306a and the guide fins 336 next to the lower guide 306b. The lever is then moved in the direction of the arrow to engage the rod-like section 328 and the upper guide 306a and to align the guide fins 336 with the lower guide 306b. In figure 6 b) the rod-like section 328 and the upper guide 306a are engaged and the guide fins 336 are aligned with the lower guide 306b. Now the lever 308 is moved in the direction of the arrow, for engaging the guide fins 336 and the lower guide 306b. Note how rod-like section 328 engaged with upper guide 306a permits the movement. In figure 6 c) the lever 308 is mounted to the receiving part 306, and the upper and lower guides 306a and 306b and the rod-like section 328 and the guide fins 336 received therein permit a linear movement along one axis only, as indicated by the arrows in figure 7.

Figure 8 shows the assembly of brackets 310 to respective pairs of levers 308 that are mounted in receiving parts 306 of the charging socket 300. The guide blades 330 are received in the respective guide groove 322, and the tips of the blades 318 rest against outward-facing surfaces of the oblique guide plane 332 of the respective lever 308. The force transmission block 320 is in contact with the inward-facing surface of the oblique guide plane 332 of the respective lever 308. The various points of contact between the bracket 310 and the lever 308 provide an oblique sliding path for each lever 308 within the bracket 310, which results in the levers 308 being forced apart when a force acts on the bracket 310 in the direction of the arrows shown in the figure, and forced towards each other when a force acts on the bracket 310 in the opposite direction. The corners of the force transmission block 320 may be rounded or tapered to provide a defined friction surface in contact with the oblique guide plane 332. Note also how the blades 318 engaging with the outward-facing surfaces of the oblique guide plane 322 of the respective lever 308 prevent unwanted disassembly of the bracket 310 and the levers 308 when the bracket 310 is pulled upwards against the direction of the arrows shown in the figure. In order to assemble or disassemble the bracket 310 and the levers 308 the tabs 312 need to be bent away from each other, with the connecting section 316 and the frame 314 providing the required resilience.

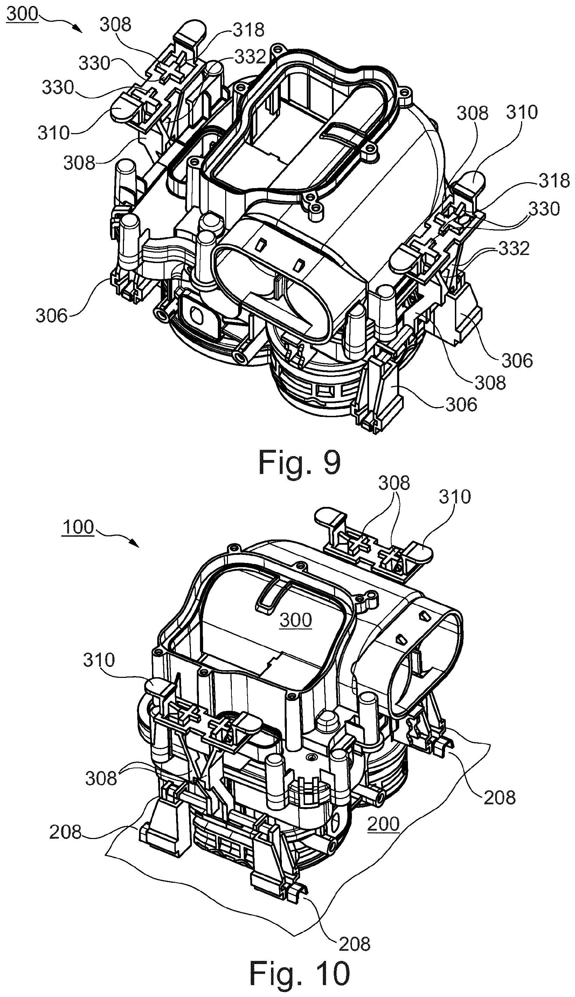

Figure 9 shows a perspective view of the charging socket 300 with four levers 308 and two brackets 310 mounted thereto. In the figure, the pairs of levers 308 and the associated brackets 310 are located at opposing sides of the charging socket 300, effectively providing fixing mechanisms for fixing the charging socket 300 at four corners.

Figure 10 shows the assembly of figure 9 placed on a holder or base plate 200, forming a charging port assembly 100. In the figure the locking studs 334 (not visible in the figure) are placed in proper alignment with the openings of the respective lugs 208, ready to be inserted therein, for fixing the charging socket 300 to the holder or base plate 200.

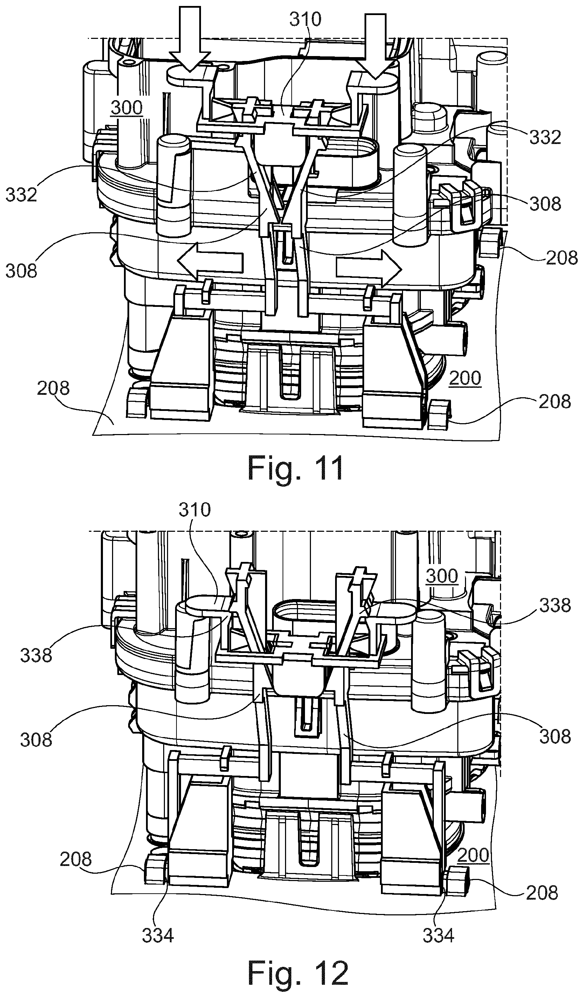

Figure **11** shows the fixing of the charging socket 300 to the holder or base plate 200 by means of the levers 308 of the charging socket 300 engaging in the lugs 208 of the holder or base plate 200. When pressure is exerted on the bracket 310 in the direction of the vertical arrows, the bracket 310 will move downwards. The oblique sliding path formed between the oblique guide planes 332 of the levers and the points of contact between the bracket 310 and the levers 308 will push the levers away from each other in the direction of the horizontal arrows. This translational movement will move the locking studs or pins 334 (not visible in the figure) into the openings of the lugs 208, thereby fixing the charging port 300 to the holder or base plate 200.

Figure 12 shows the charging socket 300 fixed to the holder or base plate 200. When the bracket 310 is fully pushed towards the holder or base plate 200, the locking studs or pins 334 are fully engaged in the openings of the lugs 208, and locking ledges 338 of the respective levers 308 hook over upper surfaces of the tabs 312, preventing any movement of the bracket 310 away from the holder or base plate 200 and thus a disengagement of the charging socket 300 from the holder or base plate 200. In order to disengage said two components, the tabs 312 need to be bent outwards from each other, or the upper ends of the levers 308 need to be bent towards each other, for releasing the tabs 312 from the locking ledges 338, and the bracket 310 needs to be pulled away from the holder or base plate 200 while the tabs 312 are bent outwards or the upper ends of the levers 308 are bent towards each other.

### List of reference numerals (part of the description)

| | | | |
|---|---|---|---|
| 100 | charging port assembly | 310 | bracket |
| 200 | holder/base plate | 312 | tab |
| 202 | opening | 314 | centre frame |
| 204 | snap hook / resilient latching means | 316 | connecting section |
| | | 318 | blade |
| 206 | protruding part | 320 | force transmission block |
| 208 | lug / non-resilient latching means | 322 | guide groove |
| | | 324 | first section of lever |
| 208a | base section | 326 | second section of lever |
| 300 | charging socket | 328 | rod-like section |
| 302 | housing | 330 | guide blade |
| 304 | ridge/rim/groove | 332 | oblique guide plane |
| 306 | receiving part | 334 | locking stud / pin |
| 306a | upper guide | 336 | guide fin |
| 306b | lower guide | 338 | locking ledge |
| 308 | lever | | |

## Claims

1. A charging socket (300) of a charging port assembly (100) of a hybrid or electric vehicle, comprising a housing (302) and one or more electrical contacts (304), wherein the housing (302) has at least one ledge, ridge, rim or groove (304) that is positioned and configured to engage with a protruding part (206) of a corresponding first latching means (204) of a holder or base plate (200) when the charging socket (300) is inserted into an opening (202) thereof, wherein
- the housing has at least one receiving part (306) arranged to receive a lever (308) and to provide a guide for a sliding movement of the lever (308) along an axis perpendicular to an insertion direction of the charging socket (300) into the opening (202) of the holder or base plate (200), **characterized in that**
- the lever (308) has a first (324) and a second section (326) that extend along essentially parallel axes and that are connected by a rod-like section (328) that runs essentially perpendicular to the first (324) and second section (326),
- the first section (324) is configured to be received and guided in a bracket (310) that connects two levers (308),
- the bracket comprises a centre frame (314), at opposing ends of which tabs (312) are connected to the centre frame (314) through connecting sections (316),
- a force transmission block (320) is arranged centrally on the centre frame (314) of the bracket, and
- the force transmission block (320) is configured to exert a force essentially in parallel to the rod-like section (328) for mechanically connecting the charging socket (300) with the base plate (200).

2. The charging socket (300) of claim 1, wherein the at least one receiving part (306) has an upper (306a) and a lower (306b) guide, for guiding the lever (308) along the axis perpendicular to the insertion direction of the charging port (300) into the opening (202) of the holder or base plate (200).

3. The charging socket (300) of claim 1 or 2, wherein two pairs of receiving parts (306) are arranged at opposing sides of the charging socket (300).

4. The charging socket (300) according to one of the preceding claims, wherein the at least one receiving part (306) is made from a different or same material than the housing (302) and is partially moulded into the housing (302), glued or welded to the housing (320), or attached to the housing (302) in a form-fitting manner.

5. The charging socket (300) according to one of the preceding claims, wherein the rod-like section (328) is configured to be received and guided in an upper guide (306a) of the receiving part (306), wherein the lever (308) further comprises a locking stud or pin (334) and a guide fin (336) arranged at an end of the second section (326), wherein the guide fin (336) is configured to be received and guided in a lower guide (306b) of the receiving part (306).

6. The charging socket (300) according to according to one of the preceding claims, wherein the first section (324) comprises an oblique guide plane (332) for translating a displacement of the lever (308) relative to the bracket (310) along the first section (324) into a displacement of the lever (308) perpendicular to the first section (324).

7. The charging socket (300) according to one of the preceding claims, wherein the lever (308) has a locking ledge (338) that is adapted to hook over an upper surface of a tab (312) of the bracket (310), for securing the bracket (310) against unwanted movement.

8. The charging socket (300) according to one of the preceding claims, wherein first (318) and second guides (322) for guiding a lever (308) received in the bracket (310) are provided on opposing sides of the force transmission block (320).

9. The charging socket (300) according to claim 8, wherein the first guides (318) protrude from the respective connecting section (316) in a direction facing the respective opposite connecting section (316).

10. The charging socket (300) according to claim 8 or 9, wherein the second guides (322) comprise guide grooves located at opposing sides of the force transmission block (320) and facing towards the first guides (318).

11. A charging port assembly (100) of a hybrid or electric vehicle, comprising a charging socket (300) according to any one of the preceding claims and a base plate (200) with an opening (202) adapted to receive the charging socket (300).

## Patentansprüche

1. Ladebuchse (300) einer Ladeanschlussanordnung (100) eines Hybrid- oder Elektrofahrzeugs, umfassend ein Gehäuse (302) und einen oder mehrere elektrische Kontakte (304), wobei das Gehäuse (302) mindestens eine Leiste, einen Vorsprung, einen Rand oder eine Nut (304) aufweist, die so positioniert und ausgelegt ist, dass sie mit einem Vorsprung (206) eines entsprechenden ersten Rastelements (204) einer Halterung oder einer Grundplatte (200) in Eingriff kommt, wenn die Ladebuchse (300) in eine Öffnung (202) derselben eingesetzt wird, wobei
- das Gehäuse mindestens ein Aufnahmeteil (306) aufweist, das dazu eingerichtet ist, einen Hebel (308) aufzunehmen und eine Führung für eine Gleitbewegung des Hebels (308) entlang einer Achse senkrecht zu einer Einführrichtung der Ladebuchse (300) in die Öffnung (202) der Halterung oder Grundplatte (200) bereitzustellen, **dadurch gekennzeichnet, dass**
- der Hebel (308) einen ersten (324) und einen zweiten Abschnitt (326) aufweist, die sich entlang im Wesentlichen paralleler Achsen erstrecken und durch einen stabartigen Abschnitt (328) verbunden sind, der im Wesentlichen senkrecht zu dem ersten (324) und dem zweiten Abschnitt (326) verläuft,
- der erste Abschnitt (324) so ausgelegt ist, dass er in einem Haltebügel (310) aufgenommen und geführt wird, der zwei Hebel (308) verbindet,
- der Haltebügel einen Mittelrahmen (314) umfasst, an dessen gegenüberliegenden Enden Laschen (312) über Verbindungsabschnitte (316) mit dem Mittelrahmen (314) verbunden sind,
- ein Kraftübertragungsblock (320) mittig am Mittelrahmen (314) des Haltebügels angeordnet ist, und
- der Kraftübertragungsblock (320) dazu eingerichtet ist, eine Kraft im Wesentlichen parallel zu dem stabartigen Abschnitt (328) zum mechanischen Verbinden der Ladebuchse (300) mit der Grundplatte (200) auszuüben.

2. Ladebuchse (300) nach Anspruch 1, wobei das mindestens eine Aufnahmeteil (306) eine obere (306a) und eine untere (306b) Führung zum Führen des Hebels (308) entlang der Achse senkrecht zur Einführrichtung des Ladeanschlusses (300) in die Öffnung (202) der Halterung oder der Grundplatte (200) aufweist.

3. Ladebuchse (300) nach Anspruch 1 oder 2, wobei zwei Paare von Aufnahmeteilen (306) an gegenüberliegenden Seiten der Ladebuchse (300) angeordnet sind.

4. Ladebuchse (300) nach einem der vorhergehenden Ansprüche, wobei das mindestens eine Aufnahmeteil (306) aus einem anderen oder demselben Material wie das Gehäuse (302) hergestellt ist und teilweise in das Gehäuse (302) eingeformt, mit dem Gehäuse (320) verklebt oder verschweißt oder formschlüssig an dem Gehäuse (302) befestigt ist.

5. Ladebuchse (300) nach einem der vorhergehenden Ansprüche, wobei der stabartige Abschnitt (328) dazu ausgelegt ist, in einer oberen Führung (306a) des Aufnahmeteils (306) aufgenommen und geführt zu werden, wobei der Hebel (308) ferner einen Verriegelungsbolzen oder -stift (334) und eine Führungsrippe (336) umfasst, die an einem Ende des zweiten Abschnitts (326) angeordnet ist, wobei die Führungsrippe (336) dazu ausgelegt ist, in einer unteren Führung (306b) des Aufnahmeteils (306) aufgenommen und geführt zu werden.

6. Ladebuchse (300) nach einem der vorstehenden Ansprüche, wobei der erste Abschnitt (324) eine schräge Führungsebene (332) umfasst, um eine Verschiebung des Hebels (308) relativ zu dem Haltebügel (310) entlang des ersten Abschnitts (324) in eine Verschiebung des Hebels (308) senkrecht zum ersten Abschnitt (324) umzuwandeln.

7. Ladebuchse (300) nach einem der vorhergehenden Ansprüche, wobei der Hebel (308) eine Verriegelungsleiste (338) aufweist, die dazu ausgelegt ist, über eine obere Oberfläche einer Lasche (312) der Halterung (310) zu haken, um die Halterung (310) gegen unerwünschte Bewegung zu sichern.

8. Ladebuchse (300) nach einem der vorhergehenden Ansprüche, wobei eine erste (318) und eine zweite Führung (322) zum Führen eines in dem Haltebügel (310) aufgenommenen Hebels (308) auf gegenüberliegenden Seiten des Kraftübertragungsblocks (320) bereitgestellt sind.

9. Ladebuchse (300) nach Anspruch 8, wobei die ersten Führungen (318) von dem jeweiligen Verbindungsabschnitt (316) in einer Richtung vorstehen, die dem jeweiligen gegenüberliegenden Verbindungsabschnitt (316) zugewandt ist.

10. Ladebuchse (300) nach Anspruch 8 oder 9, wobei die zweiten Führungen (322) Führungsnuten umfassen, die an gegenüberliegenden Seiten des Kraftübertragungsblocks (320) angeordnet sind und zu den ersten Führungen (318) weisen.

11. Ladeanschlussanordnung (100) eines Hybrid- oder Elektrofahrzeugs, umfassend eine Ladebuchse (300) nach einem der vorhergehenden Ansprüche und eine Grundplatte (200) mit einer Öffnung (202), die dazu ausgelegt ist, die Ladebuchse (300) aufzunehmen.

## Revendications

1. Prise de charge (300) d'un ensemble port de charge (100) d'un véhicule hybride ou électrique, comprenant un boîtier (302) et un ou plusieurs contacts électriques (304), le boîtier (302) présentant au moins une saillie, une arête, un rebord ou une rainure (304) qui est positionné(e) et conçu(e) pour venir en prise avec une partie saillante (206) d'un premier moyen de verrouillage (204) correspondant d'un élément de maintien ou d'une plaque de base (200) lorsque la prise de charge (300) est insérée dans une ouverture (202) de celui-ci,
- le boîtier comprenant au moins une partie de réception (306) conçue pour recevoir un levier (308) et pour fournir un guide pour un mouvement coulissant du levier (308) le long d'un axe perpendiculaire à une direction d'insertion de la prise de charge (300) dans l'ouverture (202) de l'élément de maintien ou de la plaque de base (200), **caractérisé en ce que**
- le levier (308) comprend une première (324) et une seconde section (326) qui s'étend selon des axes sensiblement parallèles et qui sont reliées par une section du type tige (328) qui s'étend sensiblement perpendiculairement aux première (324) et seconde sections (326),
- la première section (324) est conçue pour être reçue et guidée dans un support (310) qui relie deux leviers (308),
- le support comprend un cadre central (314), aux extrémités opposées duquel des pattes (312) sont reliées au cadre central (314) par des sections de liaison (316),
- un bloc de transmission de force (320) est disposé centralement sur le cadre central (314) du support, et
- le bloc de transmission de force (320) est conçu pour exercer une force essentiellement parallèle à la section du type tige (328) pour relier mécaniquement la prise de charge (300) avec la plaque de base (200).

2. Prise de charge (300) selon la revendication 1, l'au moins une partie de réception (306) comprenant un guide supérieur (306a) et un guide inférieur (306b), pour guider le levier (308) le long de l'axe perpendiculaire à la direction d'insertion du port de charge (300) dans l'ouverture (202) de l'élément de maintien ou de la plaque de base (200).

3. Prise de charge (300) selon la revendication 1 ou 2, deux paires de parties de réception (306) étant disposées sur des côtés opposés de la prise de charge (300).

4. Prise de charge (300) selon l'une quelconque des revendications précédentes, l'au moins une partie de réception (306) étant réalisée dans un matériau différent ou identique à celui du boîtier (302) et étant partiellement moulée dans le boîtier (302), collée ou soudée au boîtier (320) ou fixée au boîtier (302) par complémentarité de forme.

5. Prise de charge (300) selon l'une des revendications précédentes, la section du type tige (328) étant conçue pour être reçue et guidée dans un guide supérieur (306a) de la partie de réception (306), le levier (308) comprenant en outre un goujon ou une goupille de verrouillage (334) et une ailette de guidage (336) disposée au niveau d'une extrémité de la seconde section (326), l'ailette de guidage (336) étant conçue pour être reçue et guidée dans un guide inférieur (306b) de la partie de réception (306).

6. Prise de charge (300) selon l'une quelconque des revendications précédentes, la première section (324) comprenant un plan de guidage oblique (332) pour translater un déplacement du levier (308) par rapport au support (310) le long de la première section (324) en un déplacement du levier (308) perpendiculaire à la première section (324).

7. Prise de charge (300) selon l'une quelconque des revendications précédentes, le levier (308) comportant une saillie de verrouillage (338) qui est conçue pour s'accrocher sur une surface supérieure d'une patte (312) du support (310), pour fixer le support (310) contre un mouvement indésirable.

8. Prise de charge (300) selon l'une des revendications précédentes, des premier (318) et second (322) guides pour guider un levier (308) reçu dans le support (310) étant fournis sur des côtés opposés du bloc de transmission de force (320).

9. Prise de charge (300) selon la revendication 8, les premiers guides (318) faisant saillie de la section de liaison (316) respective dans une direction faisant face à la section de liaison (316) opposée respective.

10. Prise de charge (300) selon la revendication 8 ou 9, les seconds guides (322) comprenant des rainures de guidage situées sur des côtés opposés du bloc de transmission de force (320) et faisant face aux premiers guides (318).

11. Ensemble port de charge (100) d'un véhicule hybride ou électrique, comprenant une prise de charge (300) selon l'une quelconque des revendications précédentes et une plaque de base (200) dotée d'une ouverture (202) conçue pour recevoir la prise de charge (300).
